## Europäisches Patentamt
## European Patent Office
## Office européen des brevets

(19)

(11) Veröffentlichungsnummer: **0 044 403**
A2

(12)
# EUROPÄISCHE PATENTANMELDUNG

(21) Anmeldenummer: 81104534.3

(22) Anmeldetag: 12.06.81

(51) Int. Cl.³: **G 01 F 9/00**
G 01 F 9/02, G 01 F 1/36
G 01 D 1/16

(30) Priorität: 19.07.80 DE 3027470

(43) Veröffentlichungstag der Anmeldung:
27.01.82 Patentblatt 82/4

(84) Benannte Vertragsstaaten:
DE FR GB IT

(71) Anmelder: ROBERT BOSCH GMBH
Postfach 50
D-7000 Stuttgart 1(DE)

(72) Erfinder: Abt, Jürgen
Leimengrubenstrasse 18
D-7016 Gerlingen(DE)

(72) Erfinder: Bollhagen, Heins
Gerlinger Strasse 103/1
D-7250 Leonberg(DE)

(72) Erfinder: Handtmann, Dieter, Dr. Dipl.-Phys.
Wilhelm-Haspel-Strasse 49
D-7032 Sindelfingen(DE)

(72) Erfinder: Wocher, Berthold, Dr. Dipl.-Ing.
H.-Längererstrasse 85
D-7250 Leonberg(DE)

(54) Verfahren zur Messung des Kraftstoffverbrauchs.

(57) Verfahren zur Messung des Momentan-Wertes des Kraftstoffverbrauchs eines mit einem Otto-Motor ausgerüsteten Kraftfahrzeuges, bei welchem der Momentanwert von dem jeweiligen im Saugrohr des Motors herrschenden Ansaugluftdruck und der Motordrehzahl abgeleitet wird.

R. 6431
17.7.1980 Lr/Hm


ROBERT BOSCH GMBH, 7000 STUTTGART 1


Verfahren zur Messung des Kraftstoffverbrauchs

Die Erfindung betrifft ein Verfahren zur Messung des Kraftstoffverbrauchs eines mit einem Otto-Motor ausgerüsteten Kraftfahrzeugs.

Bei bekannten Verfahren zur Verbrauchsmessung werden in einer zum Vergaser der Brennkraftmaschine führenden Kraftstoffleitung zwei Sensoren verwendet, nämlich ein Sensor zur Erfassung des dem Vergaser zufließenden Kraftstoffs und ein zweiter Sensor zur Erfassung des Kraftstoffrückflusses. Der tatsächliche Verbrauch des Kraftstoffs wird durch Differenzbildung der von den beiden Sensoren angezeigten Werte ermittelt. Der Einbau von zwei Sensoren ist ziemlich aufwendig.

Der Erfindung liegt die Aufgabe zugrunde ein wesentlich einfacher durchführbares Verfahren zu schaffen. Messungen der Verbrauchskennfelder von verschiedenen, in Kraftfahrzeugen verwendeten Typen von Vergasermotoren haben

. . .

gezeigt, daß mit ausreichender Genauigkeit eine Auswertung des momentanen Kraftstoffverbrauchs q erfindungsgemäß vom Saugrohrdruck $p_S$ und der Motordrehzahl $n_M$ abgeleitet werden kann, wobei $q = C. (p_S - p_0). n_M$ gesetzt wird.

Weitere Ausgestaltungen des erfindungsgemäßen Verfahrens ergeben sich aus den Unteransprüchen.

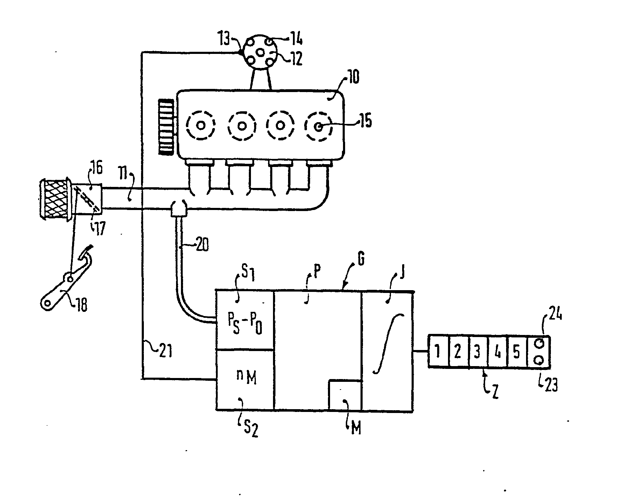

In der Zeichnung ist ein besonders einfaches Ausführungsbeispiel zur Durchführung des erfindungsgemäßen Verfahrens dargestellt. Dort ist mit 11 das Ansaugrohr einer Vierzylinder-Viertakt-Brennkraftmaschine 10 angedeutet, deren Zündverteiler 12 einen Niederspannungsanschluß 13 (Klemme 1) aufweist und an seinen Hochspannungselektroden 14 mit den Zündkerzen 15 der Brennkraftmaschine über nicht dargestellte Zündkabel ist.      In der vereinfachten Darstellung der Zeichnung führt das Saugrohr 11 von dem bei 16 angedeuteten, im einzelnen nicht näher wiedergegebenen Vergaser, dessen Drosselklappe 17 mittels eines Gaspedals 18 verstellbar ist, zu den einzelnen Zylindern der Brennkraftmaschine 10.

Zur Erfassung des Kraftstoffverbrauchs der Brennkraftmaschine 10 enthält das Meß- und Auswertegerät G zwei Sensoren, nämlich einen über eine Schlauchleitung 20 an das Ansaugrohr 11 angeschlossenen Drucksensor S1, der den im Ansaugrohr 11 herrschenden, von der Stellung der Drosselklappe 17 und der Motordrehzahl abhängigen Saugrohrdruck $p_S$ ermittelt und zur Kennlinienverschiebung die Differenz gegenüber einem Vergleichswert $p_0$ bildet. Der zweite Sensor S2 dient zur Ermittlung der jeweiligen Drehzahl $n_M$ der Brennkraftmaschine und ist über eine elektrische Leitung 21 an die Verteilerklemme 13 angeschlossen. Das Auswertegerät G enthält einen Prozessor P, der in der oben angegebenen Weise das Produkt $q = C. (p_S - p_0) . n_M$ bildet. Die Konstante C hängt von dem

...

- 3 -

jeweiligen Motor- und Fahrzeugtyp ab und kann mittels eines
einschiebbaren Moduls M berücksichtigt werden. Auf diese
Weise ist es möglich, für verschiedene Kraftfahrzeugtypen
ein gemeinsames Auswertegerät vorzusehen.

Der Prozessor P arbeitet auf einen Integrator I, an welchen
eine fünfstellige Digitalanzeige Z angeschlossen ist. Diese
zeigt den jeweiligen Kraftstoffverbrauch in Litern ($1 = dm^3$)
an. Die Integration kann mit Hilfe eines Startknopfes 23
gestartet und mit Hilfe einer Stopptaste 24 gestoppt werden.

An dem dargestellten Ausführungsbeispiel sind vor allem
die Ansprüche 3, 6, 12, 16, 17, 22, 23, 24 und 25 sowie
29 verwirklicht.

Im einzelnen gibt die am Ausführungsbeispiel erläuterte
Erfindung die Möglichkeit, im Kraftfahrzeug einzeln oder
in gegenseitiger Kombination eine Anzeige folgender
Werte zu bewirken:

- Integralwert des Verbrauchs in 1
- Integralwert des auf die Strecke bezogenen Verbrauchs in
  1/100 km ($1 = 1 \ dm^3 = 1000 \ cm^3$)
- Momentanwert des Verbrauchs in 1/h
- Momentanwert des auf die Strecke bezogenen Verbrauchs 1/100km
- Motordrehzahl
- Fahrgeschwindigkeit und
- gefahrene Strecke.

...

- 4 -

Nachstehend werden zu einzelnen Ansprüchen noch folgende
Erläuterungen gegeben:

Zu Anspruch 16:
Die Möglichkeit, den Drucksensor in der Auswerteschaltung
zu plazieren, reduziert die Forderungen an den Drucksensor
bezüglich Schüttelfestigkeit und Temperaturbereich und spart
ein Sensorengehäuse.

Zu Anspruch 17:
Der "Sensor" Motordrehzahl wird durch eine erweiterte Auswerteschaltung realisiert.

Zu Anspruch 18:
Der zusätzliche Sensor Fahrgeschwindigkeit ist dann zweckmäßig, wenn auf die Strecke bezogene Verbrauchswerte unmittelbar angezeigt werden sollen und nicht vom Fahrer
mittels Kilometerzähler am Tachometer errechnet werden
sollen.

Zu Anspruch 19:
Mit dieser Methode könnte z.B. anstelle des Geschwindigkeitssensors ein Gangschalter eingesetzt werden, was aber
vermutlich nicht sehr zweckmäßig wäre.

Zu Anspruch 21:
Diese Möglichkeit erhöht den Wert der Anzeige bedeutend.

Zu Anspruch 24:
Wichtig, wenn der integrierte Verbrauch über Tage hinweg
z.B. über eine Tankfüllung, gemessen werden soll.

...

- 5 -

Zu Anspruch 25 und 27:
Bei dem hier vorgeschlagenen System ist eine Absolutdruckmessung zweckmäßig. Eine Differenzdruckmessung zur Atmosphäre
bringt zusätzliche Fehler.

Zu Anspruch 29:
Durch diese Anordnung der faktorenbestimmenden Bauteile ist
es möglich, ein einheitliches Meßsystem für viele Kfz-Typen
zu produzieren, bei welchem dann nur dieser Modul kraftfahrzeugtypspezifisch eingesetzt werden muß.

Das erfindungsgemäße Meßverfahren hat im Vergleich zu Meßverfahren mit Durchflußmessern folgende Vorteile:

Die Durchflußmessung muß über einen Bereich 1 : 40 erfolgen.
Die Druckmessung im Saugrohr über 1:5 ist verbunden mit einer
Drehzahlmessung 1 : 8, welche absolut unproblematisch ist.

Bei vielen Zumeßsystemen (z.B. bei Vergasern mit Rücklaufleitungen) müssen zwei Durchflußsensoren eingebaut werden
und das Differenzsignal zweier großer Durchflüsse muß ausgewertet werden. Das erhöht die Kosten und verschlechtert
die Meßgenauigkeit. Beim Saugrohrdrucksystem können alle
Kfz-Typen durch ein oder wenige Meßsystemtypen abgedeckt
werden, wenn nur in der Auswerteschaltung entsprechend
Anspruch 29 kraftfahrzeugtypspezifische Module vorgesehen
werden.

...

Dies ist auch deshalb von Vorteil, weil alle Kfz-Typen einen einheitlichen Saugrohrdruckbereich 0,2 bis 1 bar besitzen, während der Durchflußmeßbereich bei verschieden großen Motoren mit der Leistung variiert. D.h. fast alle Kfz-Typen können mit einem einzigen Druckgebertyp abgedeckt werden; bei Durchflußmessern müßte eine Typenreihe abgestuft nach verschieden großen Motoren produziert werden.

Der Einbau eines Durchflußmessers bedeutet für den Motorenhersteller eine Beeinträchtigung der Zumeßanlage mit zusätzlichen Problemen und einer Umkonstruktion der Zumeßanlage. Das erfindungsgemäße Drucksystem kann nachträglich problemlos und schnell auf jedes vorhandene System (Anschluß am Saugrohrdruck) aufgeschaltet werden und bedingt keinerlei Veränderungen an den vorhandenen Zumeßsystemen.

Das Druckmeßsystem ist nachrüstbar. Der Einbau von Systemen mit Eingriff in die Benzinleitung ist für Laien und Werkstätten wesentlich schwieriger.

Die beiden Sensoren Druckgeber und Motordrehzahlgeber können in die Auswerteschaltung integriert werden.

R. 6431

17.7.1980 Lr/Hm

ROBERT BOSCH GMBH, 7000 STUTTGART

Patentansprüche:

1. Verfahren zur Messung des Kraftstoffverbrauchs einer mit einen Otto-Motor ausgerüsteten Kraftfahrzeuges, dadurch gekennzeichnet, daß der Momentanwert des Verbrauchs q

- vom Saugrohrdruck $P_S$ und

   der Motordrehzahl $n_M$

abgeleitet wird.

2. Verfahren nach Anspruch 1, dadurch gekennzeichnet, daß in einer elektronischen Auswerteschaltung aus den Signalen ($P_S$) und ($n_M$) eine dem momentanen Verbrauch (q) proportionale Signalgröße f ($p_S$, $n_M$) und das dem integrierten Verbrauch Q proportionale Integral

$$Q = \int_{t_o}^{t_1} f\,(p_S,\ n_M)\ .\ dt$$

gebildet wird.

3. Verfahren nach Anspruch 2, dadurch gekennzeichnet, daß die zweidimensionale Funktion f ($p_S$, $n_M$) durch das Produkt von zwei Funktionen f ($p_S$) und f ($n_M$) dargestellt wird:

$$f\,(p_S,\ n_M) = f\,(p_S)\ .\ f\,(n_M).$$

4. Verfahren nach Anspruch 3, dadurch gekennzeichnet, daß die Funktion $f(p_S)$ proportional dem Saugrohrdruck $(p_S)$ gesetzt wird nämlich:

$$f(p_S) = k_1 \cdot p_S \text{ wobei}$$
$$k_1 = \text{Konstante}$$

5. Verfahren nach Anspruch 3, dadurch gekennzeichnet, daß die Funktion $f(p_S)$ additiv verschoben wird, nämlich:

$$f(p_S) = f_1(p_S) - p_0, \text{ wobei}$$
$$p_0 = \text{Konstante.}$$

6. Verfahren nach Anspruch 5, dadurch gekennzeichnet, daß $f(p_S)$ linear und verschoben ist:

$$f(p_p) = k_2 \cdot (p_S - p_0)$$
$$k_2 = \text{Konstante.}$$

7. Verfahren nach Anspruch 5, dadurch gekennzeichnet, daß $f(p_S)$ gekrümmt ist (Vollastanreicherung) z.B.:

$$f(p_S) = k_3 \cdot p_S + k_4 \cdot p_S^2 - p_0$$
$$k_3 \text{ und } k_4 = \text{Konstante.}$$

8. Verfahren nach Anspruch 6 oder 7, dadurch gekennzeichnet, daß die Auswerteschaltung bei Saugrohrdrücken größer als $p_1$ die Konstanten $k_2$, $k_3$, $k_4$ auf einen anderen, bevorzugt

...

0044403 1

einen größeren Wert schaltet (Vollastanreicherung).

9. Verfahren nach einem der Ansprüche 4 bis 7, dadurch gekennzeichnet, daß die Auswerteschaltung bei Saugrohrdrücken größer als $p_1$ die Funktion $f(p_S)$ auf einen konstanten Wert schaltet (Vollastanreichung).

10. Verfahren nach einem der Ansprüche 4 bis 9, dadurch gekennzeichnet, daß die Auswerteschaltung bei Saugrohrdrücken kleiner als $p_2$ die Funktion $f(p_S)$ auf einen konstanten Wert, bevorzugt = 0, schaltet. (Bei vom Saugrohrdruck abhängiger Schubabschaltung).

11. Verfahren nach einem der Ansprüche 3 bis 10, dadurch gekennzeichnet, daß die Auswerteschaltung bei Werten für $f(p_S, n_M)$ kleiner als $q_1$ die Funktion $f(p_S, n_M)$ auf einen konstanten Wert setzt (konstanter Momentanverbrauch im Schleppbetrieb und im Leerlaufbetrieb bei Vergasermotoren).

12. Verfahren nach einem der Ansprüche 3 bis 11, dadurch gekennzeichnet, daß das Motordrehzahlsignal $f(n_M)$ proportional der Motordrehzahl ($n_M$) gesetzt wird:

$$f(n_M) = k_5 n_M$$
$$k_5 = \text{Konstante.}$$

. . .

– 4 –

13. Verfahren nach einem der Ansprüche 3 bis 11, dadurch gekennzeichnet, daß die Kennlinie des Motordrehzahlsignals $f(n_M)$ gekrümmt ist, insbesondere

$$f(n_M) = k_6 \cdot n_M + k_7 \cdot n^2{}_M, \text{ wobei}$$

$$k_6 \text{ und } K_7 = \text{konstant sind,}$$

$$k_7 \text{ insbesondere positiv ist.}$$

14. Verfahren nach Anspruch 12 oder 13, dadurch gekennzeichnet, daß in der Auswerteschaltung bei einem bestimmten Wert für $n_M$ die Faktoren ($k_5$, $k_6$ und $k_7$) auf andere Werte umgeschaltet werden.

15. Verfahren nach einem der Ansprüche 12 bis 14, dadurch gekennzeichnet, daß die Auswerteschaltung für $n_M$-Werte kleiner $n_{M1}$ die Funktion $f(p_S, n_M)$ auf einen konstanten Leerlaufwert schaltet (Verbrauchsanzeige für den häufig vorkommenden Leerlaufbetrieb).

16. Verfahren nach einem der Ansprüche 1 bis 15, dadurch gekennzeichnet, daß der Drucksensor in der Auswerteschaltung plaziert und mit einer Schlauchleitung mit dem Saugrohr des Motors verbunden wird.

. . .

- 5 -

17. Verfahren nach einem der Ansprüche 1 bis 16, dadurch gekennzeichnet, daß das Signal f ($n_M$) für die Motordrehzahl elektrisch an einem Anschluß der Zündanlage, z.B. an Klemme 1, abgenommen und in der Auswerteschaltung verarbeitet wird.

18. Verfahren nach einem der Ansprüche 1 bis 17, dadurch gekennzeichnet, daß zusätzlich ein Geschwindigkeitssensor für die Fahrgeschwindigkeit $v$ eingesetzt wird und an einem Anzeigedisplay wahlweise folgende Größen angezeigt werden:

- Integralwert des Verbrauchs Q in 1 oder

- Integralwert des Verbrauchs Q in DM,

- Integralwert des auf die Strecke bezogenen Verbrauchs $\frac{Q}{S}$ in 1/100 km,

- Momentanwert des Verbrauchs q in 1/h,

- Momentanwert des auf die Strecke bezogenen Verbrauchs $\frac{dQ}{dS}$ in 1/100 km,

- Motordrehzahl $n_M$ in U/min,

- Fahrgeschwindigkeit $v$ in km/h,

- gefahrene Strecke S in km,

wobei in der Auswerteschaltung die Gebersignale f ($p_S$), f ($n_M$) und $v$ nach folgenden Formeln verarbeitet werden:

. . .

$$Q = C_1 \int_{t_1}^{t_2} f\,(p_S,\ n_M)\ dt$$

$$\frac{Q}{S} = C_2 \frac{\int_{t_1}^{t_2} f\,(p^P{}_S,\ n_M)\ dt}{\int_{t_1}^{t_2} v \cdot dt}$$

$$q = C_3 \cdot f\,(p_S,\ n_M)$$

$$\frac{dQ}{dS} = C_4 \cdot \frac{f\,(p_S,\ n_M)}{v}$$

$$n_M = C_5 \cdot f\,(n_M)$$

$$v = v$$

$$S = \int_{t_1}^{t_2} v \cdot dt.$$

19. Verfahren nach Anspruch 18, dadurch gekennzeichnet, daß in der Auswerteschaltung der Wert für die Anzeige $\frac{dQ}{dS}$ und Q nach den Formeln:

$$\frac{dQ}{dS} = \ddot{u}\,(v,\ n_M)\ f\,(p_S)\ \text{und}$$

$$Q = \int_{S1}^{S2} \ddot{u}\,(v,\ n_M)\ f\,(p_S)\ ds$$

erhalten wird, darin bedeutet $\ddot{u}\,(v,\ n_M)$ eine für den jeweils geschalteten Gang gültige Konstante $\ddot{u}_n$.

. . .

20. Verfahren nach Anspruch 19, dadurch gekennzeichnet, daß die Erkennung, welcher Gang und damit welche Konstante $ü_n$ geschaltet werden soll, durch eine Komparatorschaltung von $z$ und $f(n_M)$ oder durch einen Gangschalter erfolgt.

21. Verfahren nach einem der Ansprüche 1 bis 20, dadurch gekennzeichnet, daß Beginn und Ende der Integrationen ($t_1$ und $t_2$) vom Fahrer des Kraftfahrzeuges bestätigbar ist.

22. Verfahren nach einem der Ansprüche 1 bis 21, dadurch gekennzeichnet, daß der Proportionalitätsfaktor C für die Verbrauchswerte $f(p_S, n_M)$ vom Fahrer des Kraftfahrzeuges nachjustiert wird.

23. Verfahren nach einem der Ansprüche 18 bis 22, dadurch gekennzeichnet, daß für alle Anzeigefunktionen nur ein gemeinsames, bevorzugt digitales, Anzeigedisplay verwendet wird, welches durch den Fahrer auf die verschiedenen Anzeigefunktionen umschaltbar ist.

24. Verfahren nach einem der Ansprüche 2 bis 23, dadurch gekennzeichnet, daß die Integrale in digitalen Speichern (Zählern) gebildet werden, die den Inhalt beim Abschalten der Versorgungsspannung behalten.

...

25. Verfahren nach einem der Ansprüche 1 bis 24, dadurch gekennzeichnet, daß der Drucksensor als Absolutdruckmesser (Vakuumdose) ausgebildet ist.

26. Verfahren nach einem der Ansprüche 1 bis 25, dadurch gekennzeichnet, daß die Temperatur $T_L$ der Ansaugluft als Korrekturgröße verwendet wird.

27. Verfahren nach Anspruch 25 oder 26, dadurch gekennzeichnet, daß der Drucksensor ein durch die Lufttemperatur T korrigiertes Drucksignal $f(p_S, T)$ liefert (Druckdose mit Dampffüllung).

28. Verfahren nach einem der Ansprüche 1 bis 27, dadurch gekennzeichnet, daß die Temperatur $T_M$ des Motors als Korrekturgröße verwendet wird (Kaltstartanreicherung).

29. Verfahren nach einem der Ansprüche 1 bis 28, dadurch gekennzeichnet, daß Bauelemente oder Speicherelemente, welche fahrzeugtypspezifische Konstanten und Funktionen zur Erzeugung von $q = f(p_S, n_M, T_L, T_M)$ enthalten, auf einem steckbaren Modul zusammengefaßt werden. (z.B.: $c_n$, $k_n$, $p_n$, $n_{Mn}$, $ü_n$).

...

0044403

30. Verfahren nach einem der Ansprüche 2 bis 29, dadurch gekennzeichnet, daß der Proportionalitätsfaktor $C_1$, bei der Anzeige des integrierten Verbrauchs Q in DM vom Fahrer je nach Benzinpreis pro Liter eingestellt wird.

1/1

0044403